# EUROPÄISCHE PATENTANMELDUNG

(11) **EP 1 887 071 A1**
(43) Veröffentlichungstag der Anmeldung: **13.02.2008**
(21) Anmeldenummer: 06015888.8
(22) Anmeldetag: 31.07.2006
(51) Int. Cl.: C10G 2/00, C07C 1/12, B01J 23/02

(54) **Gesamtverfahren zur synthetischen Herstellung von Kohlenwasserstoffen und deren Derivate mit Kohlendioxid CO2 und Wasserstoff H2 als Synthesegase**

(71) Anmelder: Wagner, Edmund, Dr.-Ing., 65187 Wiesbaden (DE)
(72) Erfinder: Wagner, Edmund, Dr.-Ing., 65187 Wiesbaden (DE)

(57) **Zusammenfassung**

Es wird ein Gesamtverfahren vorgestellt, welches die Gase CO₂ und H₂ als Synthesegase verwendet, die zuvor aus der Normalatmosphäre und/oder angereicherten Prozessatmosphären (Abgase aus Vorausprozessen wie Ammoniaksynthese, Stickstoff- und/oder Sauerstoff- und/oder Edelgasgewinnung durch Luftzerlegung sowie nach dem Oxyfuel-Verfahren) entnommen worden sind.

Die Synthese findet entweder unter den Bedingungen der Fischer-Tropsch-Synthese oder aber mit Hilfe anderer Katalysatoren statt, die-von Silber, Alkali- und/oder Erdalkali-Metallen abgeleitet werden, und die rein oder mit bekannten Trägermaterialien oder solchen aus dem System CaO-SiO₂ und dessen Reaktionsprodukten Verwendung finden, welches auch alleine als Katalyse-Substanz dienen kann.

Ziel ist die Synthese von CO₂ und H₂ zu Kohlenwasserstoffen, die zu Brennstoffen, Treibstoffen oder zu Vorprodukten weiterer Derivate (Alkohole, Polymerrohstoffe) umgesetzt werden.

## Beschreibung

Die Erfindung betrifft ein Gesamtverfahren zur synthetischen Herstellung von Kohlenwasserstoffen, welche vor allem für Treibstoffe geeignet sind, und deren weiterführende Derivate, wobei neben Wasserstoff (H₂) Kohlendioxid (CO₂₎ nach unterschiedlichen Ausgangs-Aggregatszuständen als Synthesegas eingesetzt wird, welches vorwiegend aus Normal- oder angereicherten Atmosphären gewonnen werden kann.

Es wird im Folgenden für Kohlendioxid bzw. Kohlenstoffdioxid durchweg die chemische Formel CO₂ und für Wasserstoff H₂ verwendet.

Der Stand der Technik in der Energiewirtschaft wird vorwiegend durch die zur Verfügung stehenden natürlichen Ressourcen bestimmt. Ziel ist es durchweg, Kohlenwasserstoffe zu erhalten, die entweder für Brenn- und Treibstoffe eingesetzt werden können oder aber als Vorprodukte für nachgeordnete Synthesen. Immer soll dabei die Kettenbildung der Kohlenwasserstoffe und deren Derivate genutzt werden, vor allem auch für die Erzielung von Polymeren.

Zunächst soll daher in dieser Darstellung beispielhaft die Erzielung von flüssigen und gasförmigen Kohlenwasserstoffen zur Verwendung als Treibstoffe und Chemierohstoffe im Vordergrund stehen.

Ausgangsrohstoffe sind hierzu zunächst durchgängig fossile Rohstoffe wie Kohle, Erdöl und Erdgas, welche zu den geforderten Ausgangsstoffen, sei es durch Rektifizierung oder Umwandlung durch Synthese, produziert werden. Es sollen hier nur einzelne Verfahren beispielhaft aus einer Vielzahl herausgegriffen werden:

### A) Fest zu Flüssig (Solid To Liquid, STL-Processing):

Kohlevergasung mit üblicherweise anschliessender Fischer-Tropsch-Synthese (Benzin, Diesel)

### B) Flüssig zu Flüssig (Liquid To Liquid, LTL-Processing)

Rektifizierung von Erdöl unter Einbeziehung von Crackverfahren (Benzin, Kerosin, Diesel usw.)

### C) Gasförmig zu Flüssig (Gas To Liquid, GTL-Processing)

Umwandlung von Erdgas zu flüssigen Treibstoffen oder Methanol (Methanolsynthese)

Die gewonnenen Ergebnisstoffe zur
- Gewinnung von Wärmeenergie (Heizungssysteme usw.) oder
- Rotationsenergie und sonstige Antriebsenergie (Stromerzeugung, Fahrzeuge, Flugzeuge)
sollen hier im Vordergrund stehen, bei deren Verwendung stets CO₂ als Verbrennungsgas freigesetzt wird, welches vorher im zeitnahen Naturhaushalt noch nicht vorhanden war. Es findet somit eine nachhaltige Anreicherung der Umgebungsluft (Atmosphäre) mit CO₂ statt. Man spricht daher von CO₂ als Schadgas und Treibhausgas. Es handelt sich dabei um ein Abfallprodukt der modernen Energiegeschichte.

Als traditionell vorrangige Synthesegase für einen Teil der o.g. Verfahren gelten Kohlenmonoxid CO und Wasserstoff H₂. Aus diesen setzen sich nahezu alle Stoffe der organischen Chemie einschl. der Polymerchemie zusammen. Reiner Kohlenstoff C wird eigentlich bei keiner Synthese eingesetzt. Früher oder später enden alle Ergebnisstoffe wieder in der Natur als Rückstände, Abfälle oder Abgase, wobei vor allem die Abgase mit CO₂ als Hauptgas die bekannten Schadwirkungen haben.

Die bisherigen Bemühungen, CO₂ als Schadgas zu vermeiden, können als grundsätzlich gescheitert angesehen werden, da alle Recyclingbemühungen doch immer früher oder später dazu führen, dass CO₂ neben anderen Schadgasen in die Atmosphäre gelangt und diese anreichert..

Eine Überlegung, in Treibstoffen dasjenige CO₂ durch Verbrennung freizusetzen, welches zuvor durch pflanzliches Wachstum eingelagert worden war, führt gegenwärtig zum Anbau von sog. Energiepflanzen wie Raps, Getreide, Mais und anderen Nutzpflanzen als Biomasse, die nach der Ernte zu Treibstoffen (Alkoholen u.a.) umgewandelt werden. Dieser Kreislauf gilt als CO₂-neutral. Es muss dabei festgehalten werden, dass dies ein durchaus richtiger, aber aufwändiger und kostenintensiver Weg ist, CO₂ zunächst auf natürlichem Weg zu binden, um es dann nach dem Nutzeinsatz wieder frei zu setzen.

Gegenwärtig werden in Deutschland auf diese Weise rund 2 % des Gesamt-Energieaufkommens gewonnen. Zieldaten sind: 15 % bis 2015 und 25 % bis 2025. Dabei muss man berücksichtigen, dass Deutschland beim Einsatz von Biomasse eine Welt-Spitzenposition einnimmt, andere Länder somit weit niedriger liegen oder aber überhaupt keine Biomasse zur Energiegewinnung CO₂-neutral einsetzen, was bedeutet, dass Energie weltweit auch in den nächsten 10 oder 20 Jahren zu weit über 90 % aus fossilen Rohstoffen dargestellt werden muss, was zu den hinreichend bekannten CO₂-Emissionen und deren Klima-Konsequenzen führt. Der weiter andauernde Anstieg der weltweiten Energiemenge kompensiert weitgehend den Anstieg der Energie aus Biomasse.

*Zwischenergebnis:* Auch die nachhaltigste Verwendung von Biomasse für CO₂-neutralen Einsatz bringt in der näheren und ferneren Zukunft keine wesentliche Lösung des Klimaproblems durch Emission von CO₂, da fossile Brennstoffe unverändert gebraucht werden.

Ein weiteres, hochaktuelles Verfahren, CO₂ nicht als Abgas in die Atmosphäre gelangen zu lassen, sondern einzuspeichern, ist im sog. *Oxyfuel*-Verfahren zu sehen. Hierbei wird in stationären Anlagen (Kohlekraftwerken) zur Verbrennung anstelle von Atmosphärenluft nahezu reiner Sauerstoff eingeblasen, damit als Verbrennungsgas nahezu reines CO₂ abgefangen und in besonderer Weise eingelagert werden kann, um die Umwelt nicht zu belasten. Das Ergebnis dieses Verfahrens ist zunächst eine beträchtliche Verringerung des Kraftwerkswirkungsgrads, hinzu kommen Kosten und weitere Probleme für die Einlagerung, eine Erfahrung, die man schon bei der Zwischen-und vermeintlichen Endlagerung von Nuklearmüll gemacht hat. Wann sich das eingelagerte CO₂ dann doch früher oder später wieder freisetzt, ist eine Frage der Länge der Warteschleife. Der Wert dieses Verfahrens ist wohl vorwiegend im Gewinn aus Verkaufsoptionen von CO₂-Bonds zu sehen. Überdies steht dieses Verfahren noch im Versuchsstadium, so sehr der Ansatz sicher richtig ist, bei der Energiegewinnung aus fossilen Brennstoffen die Prozessführung ohne CO₂-Belastung der Luft ablaufen zu lassen.

Die Darstellung von CO₂ geschieht derzeit ausschliesslich über angereicherte Gase, d.h. Gasen, die bereits einen höheren CO₂-Gehalt haben als die Normalatmosphäre. Über mehrere Stufen einer weiteren Anreicherung gelangt man schliesslich zu reinem CO₂.

Dieses wird überwiegend in der Lebensmittelindustrie eingesetzt (Getränkeindustrie, Lebensmittelkühlung durch sog. Trockeneis), sowie für Spraydosen und Feuerlöscher. Es gilt als geringwertiges Wirtschaftsgut und wird, soweit bekannt, nirgendwo für Synthesen herangezogen, es sei denn in kleinen Mengen in der Pharmazie. Immerhin gilt CO₂ als Abfallprodukt (Abgas) bei der industriellen und privaten Verbrennung von fossilen Rohstoffen und anderen Verbrennungsmassnahmen (Holz, Abfall usw. s.o.) sowie beim Einsatz von Verbrennungsmaschinen.. Nicht unerwähnt bleiben soll das Entstehen von CO₂ bei der Atmung, Gärung und Verwesung.

Lediglich die Natur vermag CO₂ direkt aus der Atmosphäre aufzunehmen und als Energiespeicher in Form von Kohlehydraten beim Pflanzenwachstum einzulagern (Photosynthese).

Die Nachteile beim Stand der Technik können noch einmal wie folgt zusammengefasst werden:

### A. Energiegewinnung durch fossile Brennstoffe

- *Vorteil:*: Rohstoffe sind bisher in grossen Mengen und in weiten Teilen der Erde verfügbar. Gängige Technik der Herstellung von Kohlenwasserstoffen (fest, flüssig, gasförmig) und Derivaten.
- *Nachteil:*: Freisetzung von Verbrennungsgasen, insbesondere CO₂, welche zu ernsthaften Klimaschäden bereits in der Gegenwart und verstärkt bis in die ferne Zukunft führen. Endlichkeit der fossilen Rohstoffe. Es ist schon in naher Zukunft mit dem Versiegen dieser Rohstoffe, insbesondere der flüssigen und gasformigen, zu rechnen, was heute schon zu zeitweisen Engpässen sowie erheblichen und anhaltenden Preiserhöhungen beim Verbraucher führt.

### B. Energiegewinnung aus erneuerbaren Rohstoffen der Natur (Energiepflanzen)

- *Vorteil:*: CO₂-neutrale Energiewirtschaft, d.h. das durch Nutzung (Verbrennung) freigesetze CO₂ wurde zuvor beim Planzenwachstum der Atmosphäre entnommen und eingelagert.
- *Nachteil:*: Bis in absehbare Zeit wird auf diese Weise nur ein geringer Anteil am Energieaufkommen errungen werden können (max. 2-5 %), so dass proportional zum steigenden Energieverbrauch die fossilen Brennstoffe immer über 90 % (bis zu deren Versiegen) weitergenutzt werden müssen und der Anteil der Klimagase weiter ansteigt.

### C. Energiegewinnung aus Abfällen

- *Vorteil:*: Sinnvolle Nutzung anfallender Abfälle, Gülle usw.
- *Nachteil:*: Immer nur geringer Anteil am Energieaufkommen, Freisetzung von zahlreichen Abgasen, nicht nur CO₂, verbleibende Restabfälle.

### D. Energieizewinnung nach dem Oxyfuel-Verfahren

- *Vorteil:*: Weitgehend CO₂-freie Prozessführung durch Einlagerung
- *Nachteil:*: Nur Stromerzeugung, geringerer Kraftwerkswirkungsgrad, Einlagerung, keine wirkliche Beseitigung von CO₂, vorerst nur Versuchsanlagen, hohe Kosten.

Es konnten nur die wichtigsten Arten der gegenwärtigen Energiegewinnung aufgeführt werden.

Der Erfindung liegt die Aufgabe zugrunde, einerseits die genannten Vorteile der bestehenden Verfahren aufzugreifen und, wenn möglich, beizubehalten, andererseits aber deren deutliche Nachteile durch eine neue Prozessführung bei der Grosssynthese nachhaltig zu beseitigen, indem die CO₂-Bilanz ausgeglichen bleibt, somit kein neues CO₂ mehr die Atmosphäre weiter anreichert, und zudem die Endlichkeit der fossilen Brennstoffe aufgehoben wird, nämlich durch Einsatz von CO₂ als allgegenwärtigem Rohstoff als Synthesegas.

Zunächst darf eingefügt werden, dass der Erfindung die Grundüberlegung zu der nunmehr rund hundert Jahre alten Ammoniaksynthese, bekannt als Haber-Bosch-Verfahren, zur Verfügung stand. Bis dato war es erforderlich, Chile-Salpeter zu importieren, um an den Rohstoff Ammoniak zu gelangen. Der weite Transport war nicht nur risikoreich. Die Salpeter-Vorräte waren endlich und knapp, Salpeter galt zudem auch als strategischer Rohstoff in vieler Hinsicht.

Nunmehr vermochte durch das Haber-Bosch-Verfahren Stickstoff als frei und unendlich verfügbarer Rohstoff genutzt zu werden. Dieses Ziel wird auch anhand der vorgestellten Erfindung verfolgt, wenn man die Eigenschaften ,endlich' und 'strategisch' auch bei den Rohstoffen Erdöl und Erdgas zu Grunde legt.

Hinzu kommen noch die aufgezeigten klimaschädlichen Eigenschaften durch den CO₂-Anstieg in der Atmosphäre, der ebenfalls beseitigt werden soll.

Erfindungsgemäss wird ein grosstechnisches Gesamtverfahren vorgestellt, wonach zunächst CO₂ der Normalatmosphäre oder angereicherter Atmosphäre entnommen wird und hierauf zusammen mit Wasserstoffgas H₂ entweder über die Fischer-Tropsch-Synthese oder mit Hilfe anderer Katalysatoren, teilweise über Kohlenmonoxid CO als sich ergebendes Zwischenprodukt, zu Methan CH₄ oder höherwertigen Kohlenwasserstoffen CₙH₂ₙ bzw. CₙH₂ₙ₊₂ umgesetzt wird, wobei auch Derivate von Kohlenwasserstoffen wie beispielsweise Methanol oder Polymerrohstoffe direkt oder indirekt erzeugt werden können.

Die Entnahme von CO₂ aus der Normalatmosphäre geschieht vorzugsweise entweder über eine Luftzerlegungsanlage mit Hilfe kryogener Rektifikation (Joule-Thomson-Effekt) oder aber ggf. nach Trennung durch Molekularsiebe.

Selbstverständlich kommt man zur Darstellung von CO₂ leichter durch angereicherte Atmosphären mit Hilfe von Luftzerlegungsanlagen, die für die Erzeugung von Stickstoff N₂ und Sauerstoff O₂ ohnehin schon als Ausschuss abgegeben werden. Weitere Anreicherungsschritte durch Wäscher können sich anschliessen.

Auch bei der Kraftwerkstechnik wird CO₂ durch Vorgeschaltete, Integrierte oder Nachgeschaltete CO₂-Abscheidungen erhalten. In letzter Zeit ist als Integriertes Verfahren das sog. Oxyfuel-Verfahren bekannt geworden (s.o.). Es würde sich in idealer Weise eine Ergänzung dieses Verfahrens mit dem erfindungsgemässen, hier vorgestellten Gesamtverfahren anbieten, indem das beim Integrierten Verfahren gesammelte CO₂ direkt als Synthesegas eingesetzt wird und nicht nutzlos zwischen-oder endgelagert werden muss. Erst durch diese Kombination könnte das bislang unwirtschaftliche Integrierte Oxyfuel-Verfahren (Wirkungsgradverluste < 10 %) wirtschaftlich betrieben werden.

Vorteilhaft kommt hinzu, dass bei der für das Oxyfuel-Verfahren vorgeschalteten Luftzerlegungsanlage zur Darstellung des Prozessgases Sauerstoff O₂ das als Fehlgas abgesonderte CO₂ aufgefangen (und nicht abgeblasen) werden kann, um es ebenfalls als Synthesegas in den nachfolgenden, erfindungsgemässen Gesamtprozess einzuleiten.

Der augenscheinliche Nachteil einer Gemeinschaftsreaktion mit dem zunächst als beispielhaft angeführten Oxyfuel-Verfahren ist, dass diese Synthese abhängig ist von der Örtlichkeit, wo dieses kraftwerksgebundene Verfahren gerade abläuft. Dieser Nachteil setzt sich in die zur Verfügung gestellten Mengen an CO₂ fort, was zu einer Beschränkung des erfindungsgemässen Gesamtprozesses und dessen Produkte führen kann. Andererseits gelangt man bei Nutzung eines Vorausprozesses preiswert an das dort bereits vorhandene Synthesegas CO₂.

Die Darstellung von CO₂ aus der Normalatmosphäre (Umgebungsluft) ist gerade dann von Vorteil, wenn eine Quelle für eine angereicherte CO₂-Atmosphäre anhand eines vorausgehenden Verfahrens, wie im Falle Oxyfuel beispielhaft dargestellt, nicht zur Verfügung steht. Das erfindungsgemässe Gesamtverfahren lässt sich für einen solchen Fall überall erstellen, da der Gehalt von CO₂ in der Normalatmosphäre weltweit weitgehend gleich ist (ca. 370 Vppm). Der Gesamtanteil von CO₂ in der irdischen Atmosphäre beträgt ca. 2,7x10¹² Tonnen. Diese ubiquitäre Möglichkeit zur Herstellung von Kohlenwasserstoffen besteht weltweit bislang nicht. Für die Darstellung von CO₂ aus der Normalatmosphäre gibt es zur Zeit keine Fallbeispiele, da dieses Gas bislang nur für die oben aufgeführten Nebenzwecke als Billigprodukt gebraucht wird. Es reichen hierzu die durch Vorausverfahren vorhandenen angereicherten Atmosphären aus.

Die Darstellung von CO₂ aus der Normalatmosphäre geschieht vorzugsweise mit Luftzerlegungsanlagen (s.o.), die ohnehin für die Erzielung von Stickstoff (N₂) und/oder Sauerstoff (O₂) im Einsatz sind, oder aber diese Gase werden als Koppelprodukt dargestellt, wenn man sie nicht gerade als Nebenprodukt abblasen will. Ein weiteres Verfahren ist durch den Einsatz von Molekularsieben zu finden, wobei sich stets Anreicherungsverfahren anschliessen müssen, um das reine CO₂ als Synthesegas zu erhalten. Die Anreicherung (Aufkonzentrierung) geschieht vorzugsweise durch Waschprozesse auf Amin-Basis, wozu sich die MDEA-Wäsche (BASF) mit anschliessendem Strippen neben anderen empfiehlt, insbesondere wegen der niedrigeren Betriebskosten gegenüber anderen Verfahren.

Überdies sind die meisten Verfahren zur CO₂-Erfassung und Abscheidung für das erfindungsgemässe Gesamtverfahren im umgekehrten Sinne von Interesse, wobei hier insbesondere Abscheideverfahren von CO₂ durch den Einsatz von gradierten Membranen angeführt werden.

Die Darstellung des zweiten Synthesegases Wasserstoff H₂ basiert zunächst auf gängigen Verfahren wie Elektrolyse oder anderen bekannten Massnahmen. Auch fällt es bei einigen Luftzerlegungs- und anderen Verfahren zwangläufig an. Es liegt aus umweltschonenden und kostenmindernden Gründen auf der Hand, bei der Gewinnung von H₂ auf elektrovoltaische Sonnenkollektor-Anlagen zurück zu greifen, so sehr zur Zeit erst rund 5 % der H₂-Darstellung über Sonnenkollektoren läuft.

Das erfindungsgemässe Gesamtverfahren setzt sich aus einem anorganischen Teil, der die Darstellung der Synthesegase CO₂ und H₂ beinhaltet, und in dem keine chemischen Reaktionen, sowie einem organischen Teil zusammen, bei welchem die Synthesen, somit chemischen, d.h. überwiegend katalytisch bedingten Reaktionen stattfinden. Die bisherigen Betrachtungen bezogen sich somit auf den anorganischen Teil des erfindungsgemässen Gesamtverfahrens.

Der organische Teil des erfindungsgemässen Gesamtverfahrens soll nunmehr beschreiben werden.

Zunächst ist bekannt, dass CO₂ ein äusserst stabiles Gas ist, welches von selbst nur in wenigen Fällen an chemischen Reaktionen teilnimmt. Die Hydrierung von CO₂ kann somit nur über katalytische Verfahren stattfinden. Schaub, Riedel u.a. konnten aber nachweisen, dass die katalytische Hydrierung auf Basis der Fischer-Tropsch-Synthese (FTS) mit den FT-Katalysatoren Eisen (Fe) und/oder Kobalt (Co) möglich ist, wobei der Weg der Synthese allerdings mehrheitlich über das Zwischenprodukt CO verläuft, welches dann zu den Alkanen CₙH₂ₙ₊₂ reagiert, allerdings auch zu den Alkenen CₙH₂ₙ, welche durch Kettenbildung und Weiterhydrierung zu Alkanen oder durch nachfolgende Oxidation zu Methanol und weiteren längerkettigen oder höheren Alkoholen durchreagieren kann (Polymerreaktionen).

Es ist nach dieser Synthese eine Frage der katalytischen Anschlussreaktionen, die geeigneten Kohlenwasserstoffe für Treibstoffe (C_{>6}) durch z.B. Isomerisieruung selektiv zu erzielen.

Für Reaktionen neben der FTS werden erfindungsgemäss heterogene Katalysen mit Silber und/oder Alkali- und/oder Erdalkali-Metallen vorgeschlagen im Festbett- oder Slurry-Verfahren.

Beim Festbett-Verfahren wird erfindungsgemäss das System CaO-SiO₂ für die Katalyse vorgeschlagen, weil hier die Stoffkombination (Korngrösse < 1µm nach Feinschlämmung) von der basischen bis zur sauren Phase reicht. Zudem kommt es während der Katalyse zu dem Reaktionsprodukt Kalziumsilikat α-C₂S als dritter Komponente sowohl in der CO₂- als auch in der H₂-Atmosphäre insbesondere bei Hochtemperatur-Synthesen. Diese Substanz kann auch als Teil- oder Gesamt-Trägermaterial für die zuvor genannten Katalyse-Metalle dienen.

## Patentansprüche

1. Gesamtverfahren zur Herstellung von Kohlenwasserstoffen vorwiegend für Heiz- und Treibstoffe und Derivaten dieser Kohlenwasserstoffe **dadurch gekennzeichnet, dass** Kohlendioxid (CO₂) und Wasserstoff (H₂) als Synthesegase eingesetzt werden.

2. Gesamtverfahren nach Anspruch (1), **dadurch gekennzeichnet, dass** das Synthesegas CO₂ aus CO₂-angereicherten Atmosphären (z.B. Prozessabgasen) oder aus der Normalatmosphäre (Umgebungsluft) entnommen und gewonnen wird.

3. Gesamtverfahren nach Anspruch (1) und (2), **dadurch gekennzeichnet, dass** die Reaktion der beiden Synthesegase CO₂ und H₂ nach der bekannten Fischer-Tropsch-Synthese (FTS) mit Hilfe der dort eingesetzten Katalysatoren abläuft oder aber mit Hilfe von Katalysatoren ausserhalb der FTS wie Silber und Silberverbindungen, Alkalimetallen und Erdalkalimetallen im Festbett- oder Slurry-Verfahren vonstatten geht.

4. Gesamtverfahren nach Anspruch (1) bis (3), **dadurch gekennzeichnet, dass** die in Anspruch (3) genannten Katalyse-Metalle auf eine Trägersubstanz (Zeolithe oder Aluminiumoxide) oder aber auf Vorausprodukte oder Reaktionsprodukte aus dem System CaO-SiO₂ aufgebracht werden, wobei letzteres System und dessen Reaktionsprodukte auch alleine schon als Katalytsubstanz dienen kann.

5. Gesamtverfahren nach Anspruch (1) bis (4), **dadurch gekennzeichnet, dass** das Synthesegas CO₂ aus vorausgehenden anderen Verfahren wie Stickstoffgewinnung, Sauerstoffgewinnung, Oxyfuelverfahren gewonnen und in die Synthese direkt oder indirekt eingeleitet wird.

6. Gesamtverfahren nach Anspruch (1) bis (5), **dadurch gekennzeichnet, dass** die sich aus der Synthese von CO₂ und H₂ hergeleiteten Kohlenwasserstoffe direkt oder indirekt zu Isomeren, Alkanen, Alkenen und anderen für Treib- und Brennstoffen, sowie als Polymerrohstoffe nutzbaren Rohstoffen, sowie Methanol und anderen Alkoholen katalytisch weiterverarbeitet werden.
